(19)

Europäisches
Patentamt

European
Patent Office

Office européen
des brevets

(11) **EP 3 493 148 A1**

(12) **EUROPEAN PATENT APPLICATION**

(43) Date of publication:
**05.06.2019 Bulletin 2019/23**

(51) Int Cl.:
***G06T 3/40*** (2006.01)

(21) Application number: **17306668.9**

(22) Date of filing: **30.11.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **THOMSON LICENSING
92130 Issy les Moulineaux (FR)**

(72) Inventors:
• **SABATER, Neus
35576 CESSON-SEVIGNE (FR)**
• **BURELLER, Olivier
35576 CESSON-SEVIGNE (FR)**
• **GENDROT, Remy
35576 CESSON-SEVIGNE (FR)**

(74) Representative: **Huchet, Anne et al
InterDigital CE Patent Holdings
20, rue Rouget de Lisle
92130 Issy-les-Moulineaux (FR)**

(54) **VIEW SYNTHESIS FOR UNSTABILIZED MULTI-VIEW VIDEO**

(57)     A method for synthesizing a view of a scene captured with a plurality of cameras at a plurality of time instants comprises:
- obtaining video data comprising a plurality of views, each view corresponding to one of said plurality of cameras and one of said plurality of time instants, said plurality of views comprising a first view captured by a first camera at a given time instant;
- determining motion parameters representative of camera jitter in said first view;

- mapping a pixel position of said first view to a position in a synthesized target view corresponding to a target camera, said mapping being determined based on:
• said motion parameters;
• first calibration parameters of said first camera;
• second calibration parameters of said target camera;
• and depth information corresponding to said first view;

- generating said synthesized target view by performing a single warping of said first view based on said mapping.

Fig. 4

**Description**

**1. Field of the invention**

The present disclosure relates to multi-view videos, and notably to Light-Field video content. More precisely, the present disclosure relates to a method for synthesizing a view of a scene captured at a plurality of viewpoints at a plurality of time instants.

It advantageously finds applications for dynamic perspective rendering where a view of the scene is synthesized at a virtual viewpoint corresponding to the position of a user. It may also find applications for video stabilization where motion caused by camera jitter is reduced (smoothed).

**2. Background**

Compared to a conventional video, a multi-view video, such as a Light-Field video, is a richer content that opens the door to new applications. One of these applications is the visualization of views at virtual viewpoints (a.k.a *Dynamic Perspective Rendering*) for immersive applications (Dynamic Window, 3DoF (for "Degree of Freedom") with Head Mounted Display...). In the article by N. Sabater et al. "Dataset and Pipeline for Multi-view Light-Field Video" 2017 IEEE Conference on Computer Vision and Pattern Recognition Workshops (CVPRW), 21-26 July 2017, a method for dynamic perspective rendering is described.

However, when a multi-view video is captured using a hand-held device, the video is usually shaky and unpleasant to watch. For this reason, video stabilization is mandatory for almost all videos captured with smartphones or camcorders. The same problem arises for Light-Field videos captured with hand-held devices. In the patent document US 9131 155 B1, a method for video stabilization producing multiple views is described. The stabilized views can then be used for Dynamic Perspective Rendering.

Juxtaposing video stabilization and dynamic perspective rendering in such a way is however not optimal: the warping (motion compensation) required in patent document US 9 131 155 B1 for stabilizing a view produces a deformed view that is not rectangular anymore and must therefore be cropped (before being optionally auto-scaled). An important part of the Light-Field is thus lost which would have been useful for synthesizing views of larger dimensions. This loss of information is also a well-known problem in editing applications for video stabilization.

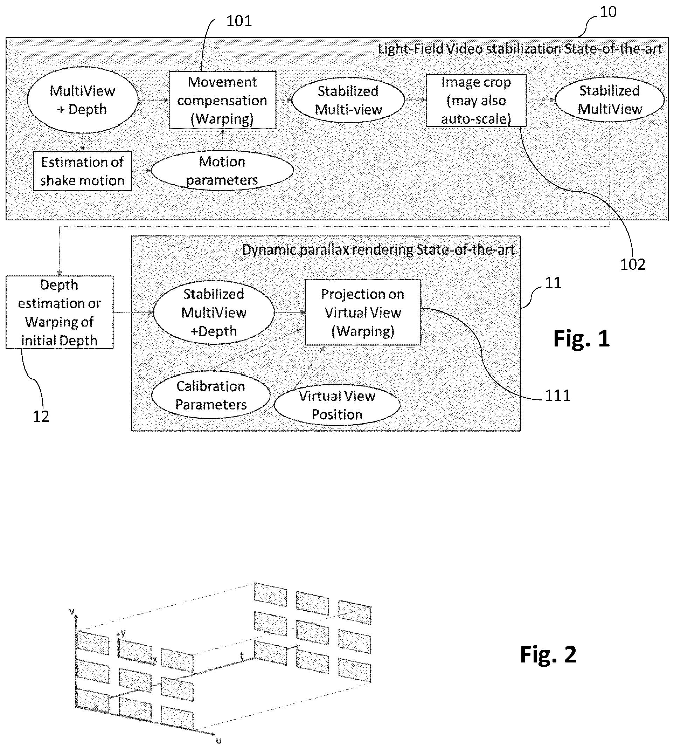

**Fig. 1** illustrates the juxtaposition of Light-Field video stabilization 10 and Dynamic Perspective rendering 11. This state-of-the-art pipeline requires warping the images twice (once for motion compensation 101 and once for virtual view synthesis 111), which increases the artifacts caused by interpolation. It also requires an extra step 12 of depth estimation for the stabilized videos or warping of the initial depth, which is time consuming. Finally, since stabilized views are cropped 102 before view synthesis, precious information at image borders is lost.

**3. Summary**

In one aspect of the present disclosure, a method for synthesizing a view of a scene captured with a plurality of cameras at a plurality of time instants is disclosed. Such a method comprises:

- obtaining video data comprising a plurality of views, each view corresponding to one of said plurality of cameras and one of said plurality of time instants, said plurality of views comprising a first view captured by a first camera at a given time instant;
- determining motion parameters representative of camera jitter in said first view;
- mapping a pixel position of said first view to a position in a synthesized target view corresponding to a target camera, said mapping being determined based on:

  • said motion parameters;
  • first calibration parameters of said first camera;
  • second calibration parameters of said target camera;
  • and depth information corresponding to said first view;

- generating said synthesized target view by performing a single warping of said first view based on said mapping.

The target camera may be one of the original cameras or a virtual camera corresponding to the position of a user relative to a visualization screen or relative to a reference in a virtual environment.

By performing motion compensation and view synthesis in a single warping step, the succession of interpolation steps of the prior art method as well as the intermediary cropping step are avoided, thus less information is lost and the synthesized target view covers a larger area. Computational efficiency is furthermore improved.

In a further aspect of the invention, mapping a pixel position of said first view to a position in said synthesized target view comprises determining a motion compensation matrix (S) based on said motion parameters, determining a projection matrix (M) based on said first calibration parameters, said second calibration parameters and said depth information, determining a transformation matrix (W) by multiplying said motion compensation matrix (S) with said projection matrix (M), and multiplying said pixel position of said first view by said transformation matrix (W).

By compiling all the parameters necessary for both stabilization and view synthesis in a single transformation matrix, the warping operation can be carried out efficiently.

When the target viewpoint is a virtual viewpoint ("Dynamic Perspective mode"), a further aspect of the invention consists in iteratively performing the steps of mapping and generating said synthesized target view by setting each view of said plurality of views captured at said given time instant as first view. The method of the present disclosure further comprises combining the synthesized target views generated for said each view.

In this embodiment, the target camera is a virtual camera corresponding to a position of a user relative to a visualization screen or relative to a reference in a virtual environment. The second calibration parameters are hence determined based on said position of said user.

By projecting several views onto the target camera and by combining the projections, a synthesized view of higher resolution and larger aspect ratio can be generated.

When the target viewpoint is one of the original cameras ("video stabilization mode"), only the views corresponding to the other cameras are both motion compensated and projected onto the target viewpoint. The view corresponding to the target camera is only motion compensated.

In this embodiment, the target camera is one of said plurality of cameras and the first camera is a different one of said plurality of cameras.

According to an aspect, such a method further comprises the steps of:

- determining second motion parameters representative of camera jitter in the target view captured by said target camera at said given time instant;
- generating a synthesized target view by warping said target view based on said second motion parameters.

According to a further aspect, mapping and generating said synthesized target view are performed iteratively by setting each view of said plurality of views captured at said given time instant as first view, except said target view, the method further comprising combining the synthesized target views generated for said each view.

In an aspect of the present disclosure according to either the first ("Dynamic Perspective mode") or the second ("video stabilization mode") embodiment, combining the warped (synthesized) views may comprise identifying the largest rectangle overlapped by the pixels of the synthesized target views; and cropping the regions of the synthesized target views falling outside of the largest rectangle.

In this mode, each warped view represents a stabilized version of the target view. These warped views may be combined as in the "Dynamic Perspective mode" to create a stabilized view of high quality.

The present disclosure also concerns a system for synthesizing a view of a scene captured with a plurality of cameras at a plurality of time instants. Such a system comprises:

- a plurality of cameras delivering video data comprising a plurality of views, each view corresponding to one of said plurality of cameras and one of said plurality of time instants, said plurality of views comprising a first view captured by a first camera at a given time instant;
- a computing unit for:

  - determining motion parameters representative of camera jitter in said first view;
  - mapping a pixel position of said first view to a position in a synthesized target view corresponding to a target camera, said mapping being determined based on:

    • said motion parameters;
    • first calibration parameters of said first camera;
    • second calibration parameters of said target camera;
    • and depth information corresponding to said first view;

  - generating said synthesized target view by performing a single warping of said first view based on said mapping;
- a display for displaying said synthesized target view.

Such a system may be embedded in a personal computer, a tablet, AR/VR glasses, a smartphone, or any other kind of handheld device.

All features of the description of the system for synthesizing a view of a scene described above in relation to embodiments of the method for synthesizing a view of a scene also apply to such a system.

Other aspects of the present disclosure relate to a device comprising means for carrying out any of the above steps.

The present disclosure also concerns a computer program product downloadable from a communication network and/or recorded on a medium readable by a computer and/or executable by a processor, comprising program code instructions for implementing a method for for synthesizing a view of a scene as described above.

The present disclosure also concerns a non-transitory computer-readable medium comprising a computer program product recorded thereon and capable of being run by a processor, including program code instructions for implementing a method for synthesizing a view of a scene as described above.

Such a computer program may be stored on a computer readable storage medium. A computer readable storage medium as used herein is considered a non-transitory storage medium given the inherent capability to store the information therein as well as the inherent capability to provide retrieval of the information therefrom.

A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a readonly memory (ROM); an erasable programmable read-only memory (EPROM or Flash memory); a portable compact disc read-only memory (CD-ROM); an optical storage device; a magnetic storage device; or any suitable combination of the foregoing.

It is to be understood that both the foregoing general description and the following detailed description are exemplary and explanatory and are not restrictive of the invention, as claimed.

It must also be understood that references in the specification to "one embodiment" or "an embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

## 4. Brief description of the drawings

The present disclosure can be better understood with reference to the following description and drawings, given by way of example and not limiting the scope of protection, and in which:

**Figure 1,** already described in relation to the prior art, illustrates a known method for performing Dynamic Perspective rendering with a Light-Field video containing motion due to camera shake.
**Figure 2** shows a model of a multi-view video such as a Light-Field video
**Figures 3 and 4** describe a process for view synthesis according to the present invention.
**Figure 5** illustrates the advantages of the invention when applied to Dynamic Perspective rendering.
**Figure 6** describes a process for video stabilization using view synthesis according to a further aspect of the present invention.
**Figure 7** illustrates the results obtained with the process of **figure 6.**
**Figure 8** is a schematic block diagram illustrating an example of a system for synthesizing a view of a scene according to an embodiment of the present disclosure

## 5. Detailed description

Given a Light-Field video captured with a hand-held device, and which suffers from unintentional motion due to hand shake, the general principle of the present disclosure relies on performing a single warping of the images at the rendering stage. In other words, the method according to the present disclosure des not warp the images before rendering, but instead estimates the motion compensation and warps the images only at the rendering stage.

Hence, the method according to the present disclosure allows warping errors to be reduced, as compared to prior art methods, and allows missing information in the border of the images due to the crop to be reduced as well.

A description will now be given of a method, an apparatus and a computer-readable storage medium for synthesizing a view of a scene in embodiments of the present disclosure.

We first recall some useful notations.

**a. Notations**

With reference to **figure 2,** a multi-view video such as a 4D Light-Field video is defined as a signal $L(x, y, u, v, t)$, wherein $(x, y)$ is a pixel position, $(u, v)$ an angular position (viewpoint) and $t$ a time instant. The existing systems can only provide a discrete and sparse version of a Light-Field video, which means that the variables $x, y, u, v, t$ can be expressed as:

$$x = x_0 + i \cdot \Delta_x , \qquad \text{where } i = 0, \dots, I - 1$$

$$y = y_0 + j \cdot \Delta_y , \qquad \text{where } j = 0, \dots, J - 1$$

$$u = u_0 + l \cdot \Delta_u , \qquad \text{where } l = 0, \dots, L - 1$$

$$v = v_0 + m \cdot \Delta_v , \qquad \text{where } m = 0, \dots, M - 1$$

$$t = t_0 + n \cdot \Delta_t , \qquad \text{where } n = 0, \dots, N - 1$$

Depending on the acquisition system, the number of pixels per view *(I)\*(J)*, the number of views *(L)\*(M)* or their density may vary. Indeed, plenoptic cameras provide densely angular Light-Fields with poor spatial resolution whereas camera rigs produce sparse Light-Fields with good spatial resolution.
Given a Light-Field, we assume that the depth $D(x,y,u,v,t)$ is known. Depth estimation is a mature topic and many solutions exist in the art. Writing the Light-Field in the MultiView + Depth (MVD) format is therefore considered straightforward. As a non-limiting example, the depth information estimated in the article by N. Sabater et al. ("Dataset and Pipeline for Multi-view Light-Field Video" 2017 IEEE Conference on Computer Vision and Pattern Recognition Workshops (CVPRW), 21-26 July 2017**)** for each view of the camera rig may be used. Alternatively, the present invention may use depth information estimated using other methods like 3D reconstruction from structure of motion or depth acquisition from sensors. While a depth map may represent the depth information, other formats such as Point Clouds are also possible.

**b. Video Stabilization**

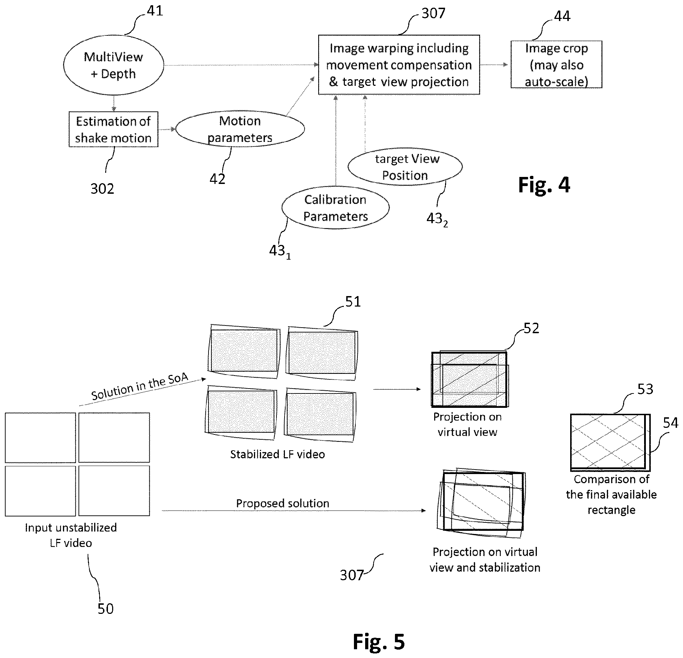

A Light-Field video captured with a hand-held device usually contains unintentional motion resulting from vibrations or from the unstable hand of the cameraman. This undesired motion is often referred to as "camera jitter", "camera shake" or "hand-shake motion" in the literature.
Such an input unstabilized Light Field video is illustrated under reference 50 in **Figure 5.**
Many solutions for extracting motion parameters representative of camera jitter exist and can be used. In a non-limiting example, global motion parameters in a given view $(u_l, v_m)$ at a given time $t$ may be estimated and filtered to output hand-shake motion parameters (see for example US 9 131 155). Depth information may be used additionally to improve the robustness of the motion estimation. In another non-limiting example, features in the captured views may be tracked in time and their trajectories may be smoothed (e.g. using Bézier curve) to output the motion parameters.
Given a pixel $(x, y)$ of the unstabilized Light-Field video at the given time $t$ in the given view $(u_l, v_m)$, the unintentional motion may then be compensated based on the extracted motion parameters. This operation can be expressed as:

$$\begin{pmatrix} x_s \\ y_s \end{pmatrix} = S \begin{pmatrix} x \\ y \end{pmatrix} \qquad\qquad (1)$$

where $(x_s, y_s)$ is the stabilized position and $S$ is a matrix containing the hand-shake motion parameters corresponding to pixel $(x, y)$.
Since $(x_s, y_s)$ may not have integer components, the motion compensation implies an interpolation of pixel values (nearest neighbours, bilinear, Lanczos kernel, ...), which is equivalent to carrying out a warping of the view $(u_l, v_m)$.

In practice, the deformation of a view may be represented by a piecewise linear model, for example a regular mesh grid (this is illustrated for example in the article *"Spatially and Temporally Optimized Video Stabilization"* by Yu-Shuen Wang et al., IEEE Transactions on Visualization and Computer Graphics 19.8 (2013): 1354-1361. In that case, the motion parameters represent the motion of vertices of the mesh and the matrix S is obtained by interpolating (e.g. linearly) the motion of the vertices of the polygon (e.g. quad) containing $(x, y)$.

Motion parameters at a given time instant may be computed for one view and applied to all other views of the given time instant. Alternatively, different motion parameters may be computed for each view.

After the view $(u_l, v_m)$ has been warped by applying equation (1) to each pixel position $(x, y)$, the warped view is generally not rectangular. It must therefore be cropped in a post-processing step before being stored or rendered. This is illustrated in **figure 5** ("Stabilized LF video" 51).

**c. Dynamic Perspective Rendering**

Rendering the Light-Field video with Dynamic Perspective consists in rendering a virtual view $(u_{virt}, v_{virt})$ at a time instant $t_n, n = 0, ..., N - 1$ that does not necessarily coincide with the captured available views $(u_l, v_m), l = 0, ... , L - 1$ ; $m = 0, ... , M - 1$ of the Light-Field $L(x, y, u, v, t)$. Depending on the application, the virtual position may be determined by the position of the user with respect to the visualization screen, or the position of the user that wears a Head Mounted Display.

A virtual view $(u_{virt}, v_{virt})$ of the Light-Field at a time instant $t_0$ can be generated based on an original view $(u_l, v_m)$ as:

$$L(x', y', u_{virt}, v_{virt}, t_0) = L(x, y, u_l, v_m, t_0),$$

$$i = 0, ..., I - 1; j = 0, ..., J - 1$$

where the value of each pixel $(x, y)$ in view $(u_l, v_m)$ is projected in the new virtual view at pixel $(x', y')$. We can write

$$\begin{pmatrix} x' \\ y' \end{pmatrix} = M_{lm \rightarrow virt} \begin{pmatrix} x \\ y \end{pmatrix}, \hspace{3cm} (2)$$

where $M_{lm \rightarrow virt}$ is the projection matrix.

Since $(x', y')$ may not have integer components, the projection implies an interpolation of pixel values (nearest neighbours, bilinear, Lanczos, ...), which is equivalent to carrying out a warping of the view $(u_l, v_m)$.

The matrix $M_{lm \rightarrow virt}$ carries an inverse projection of a pixel $(x, y)$ in 3D space followed by a projection onto the viewpoint of a virtual camera (e.g. a virtual pinhole camera). This matrix is generated based on the extrinsic and intrinsic calibration parameters of both the camera that captured view $(u_l, v_m)$ and the virtual camera, and the depth information associated to view $(u_l, v_m)$. Camera calibration is a standard procedure in the art. As in the previously cited article by N. Sabater et al., the matrix may be enriched by the parameters of a distortion warping operator associated to the camera that captured view $(u_l, v_m)$ that corrects optical aberrations of its lenses.

In practice, a virtual view is generated by re-projecting 52 each of the plurality of views onto the viewpoint of the virtual camera according to the above principles and by combining all the synthesized views. Generally, the aspect ratios of the synthesized views do not match. The combination of these views thus comprises a determination of the largest overlapped rectangle followed by a cropping of the regions falling outside of this rectangle. This is illustrated in figure 5 ("Final available rectangle" 53).

**d. View synthesis based on unstabilized video content**

Prior art methods used for synthesizing a virtual view always pre-suppose that the multi-view video has been stabilized 51 in a pre-processing step (using a video stabilization technique of the kind described above). As illustrated in **figures 1 and 5,** this means that a first warping step 101 and a first cropping step 102 are carried out before synthesizing 111 the virtual view. Therefore, information that would be useful for synthesizing the virtual view is lost and the quality of the synthesized view is impaired. Separately carrying out video stabilization 10 and view synthesis 11 is furthermore not computationally efficient, since two warping 101, 111 and two cropping steps must be performed.

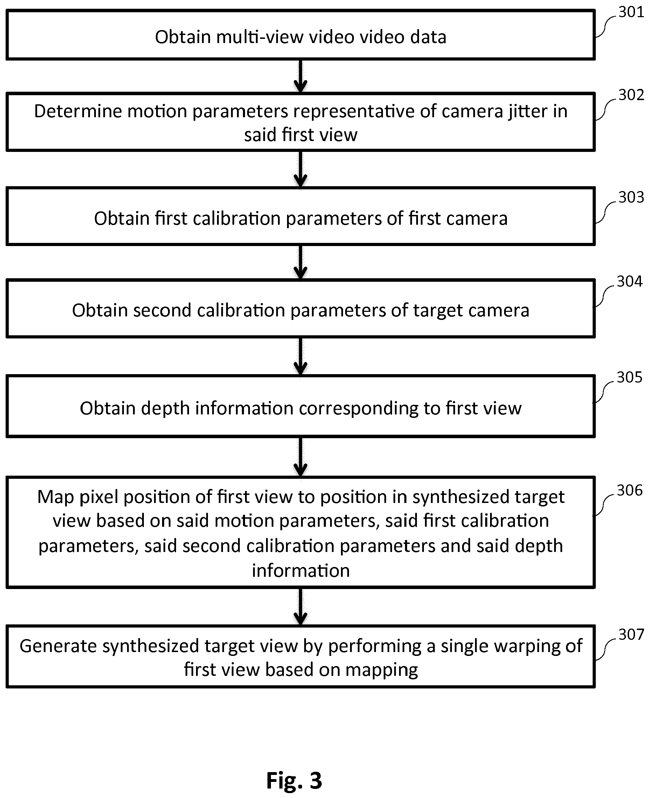

**Figure 3** presents a first embodiment of the present invention that solves these issues. At step 301 a multi-view video 41 is obtained. In a non-limiting example, the video is a 4D Light-Field video captured with a hand-held camera (e.g. camera rig).

At step 302 motion parameters 42 representative of the hand-shake motion in a first view corresponding to a first camera is determined. Any of the methods cited above may be used to obtain these parameters. Note, however, that the hand-shake motion based on these motion parameters 42 is not performed immediately. Instead the parameters 42 are stored and will be used subsequently in a single warping step 307 that simultaneously carries out stabilization and view synthesis.

At step 303 first calibration parameters $43_1$ corresponding to the first camera are obtained. The calibration parameters may include intrinsic and extrinsic parameters as commonly known. Additionally, the calibration parameters may include parameters of a warping operator correcting optical aberrations, as described above.

At step 304, second calibration parameters $43_2$ corresponding to a target viewpoint at which a view must be synthesized are determined. The target viewpoint may correspond to the position of a target camera. The target camera may be a virtual camera or one of the existing cameras. In the first scenario, the second calibration parameters $43_2$ may be determined based on the position of a user relative to a visualization screen or relative to a reference in a virtual environment (e.g. when a user wears a Head Mounted Display). In a non-limiting example, the virtual camera may be a pinhole camera and the second calibration parameters $43_2$ may be determined by interpolation or extrapolation of the calibration parameters of the existing cameras.

At step 305 depth information corresponding to the first view is obtained. As described above, the estimation of depth parameters is a mature topic and the output of any of the known techniques may be used.

At step 306, a mapping $W_{lm \to target}$ is calculated based on the motion parameters 42, the first calibration parameters $43_1$, the second calibration parameters $43_2$ and the depth information.

At step 307 an image corresponding to $(u_{target}, v_{target})$ is generated by warping the image of viewpoint $(u_l, v_m)$ using the matrix $W_{lm \to target}$. The projection of a position $(x, y)$ in $(u_l, v_m)$ to a position $(x', y')$ in $(u_{target}, v_{target})$ can be expressed as:

$$\begin{pmatrix} x' \\ y' \end{pmatrix} = W_{lm \to target} \begin{pmatrix} x \\ y \end{pmatrix} \qquad\qquad (3)$$

In an embodiment of the present invention, the matrix $W_{lm\text{-}target}$ can be computed as a multiplication of two matrices $S$ and $M_{lm \to target}$, where $S$ and $M_{lm \to target}$ are the Video Stabilization and Projection matrices described above. We can write equivalently $W_{lm \to target} = SM_{lm \to target}$ or $W_{lm \to target} = M_{lm \to target}S$.

Since the matrix $W_{lm\text{-}target}$ carries out video stabilization and view synthesis in a single step 307, the loss of information due to interpolation is reduced. Furthermore, by merging the two operations, no step of depth estimation for the stabilized video or warping the depth of the unstabilized video (**figure 1**) is required.

It is pointed out that the depth, calibration and motion parameters may be computed offline and stored. Then, given a virtual view position, the unique warping 307 proposed by this invention can be done in real-time with a GPU implementation. The proposed solution is therefore totally compatible with real-time applications like Dynamic Perspective visualization.

In the previous embodiment a single image of the multi-view video is stabilized and projected on the target viewpoint. In a further embodiment, each of a plurality of views of the captured multi-view video corresponding to the same time instant is warped following the same procedure as illustrated in **figure 3.**

In an example, the motion parameters are identical for all the views at a given time instant, thus requiring a single estimation. Alternatively, different motion parameters are determined separately or jointly for each view. Depth information may be used for improving the robustness of the estimation.

Once each view has been stabilized and projected on the target viewpoint using the corresponding matrix $W_{lm \to target}$, the warped images must be combined. As shown in **figure 5,** the warped images do not necessarily have a rectangular shape and normally do not fully overlap. The combination of the warped views therefore comprises a determination of the largest rectangle 54 overlapped by these views and a cropping 44 of the regions falling outside of this rectangle. However, since video stabilization is not performed as an independent pre-processing step in the proposed solution, the warped images are generated with the full set of original pixels. It follows that the final rectangle 54 obtained with the proposed solution is larger (see **figure 5**). The synthesized view therefore contains more information and the user experience is improved.

Note that when more than one point is projected at the same pixel position in the virtual view, different strategies can easily be implemented, like rendering techniques using a Z-buffer. Rendering can be combined with splatting which is a well-known rendering technique.

### e. Application to video stabilization

A straightforward application of the previously described embodiments is Dynamic Perspective Rendering of a Light-Field video where a virtual view of the scene must be rendered (sometimes in real-time) based on the position of a user. In such an application the target viewpoint is normally not one of the original viewpoints.

However, the inventors have realized that performing view synthesis on original viewpoints can be used to generate a stabilized multi-view video of an improved quality compared to just applying the matrix $S$.

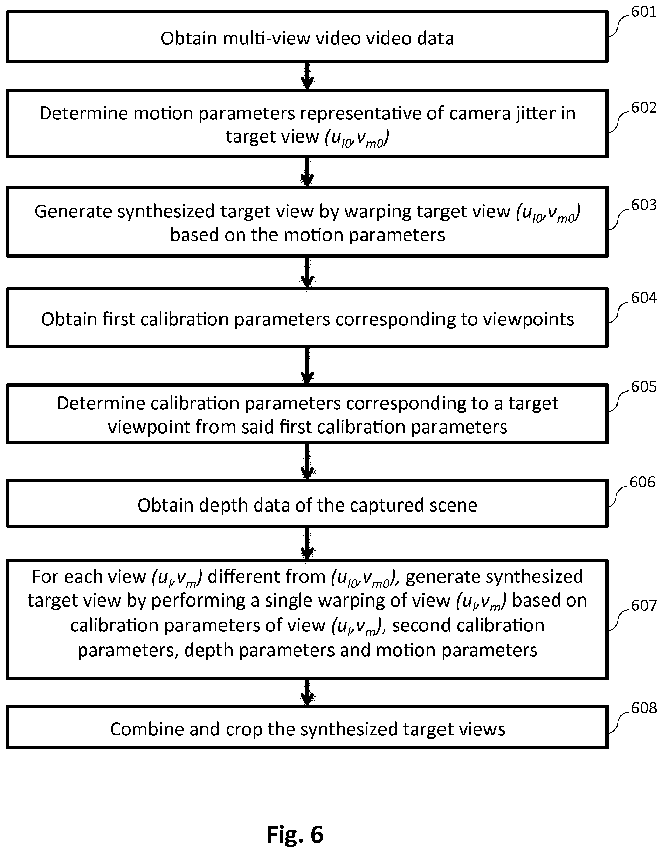

The embodiment of **figure 6** describes a method for stabilizing a view $(u_{l_0}, v_{m_0})$ of a multi-view video 70. The view $(u_{l_0}, v_{m_0})$ may correspond to any of the originally captured views, obtained at step 601. At step 602, motion parameters representative of camera jitter in view $(u_{l_0}, v_{m_0})$ are determined. At step 603, the view is motion compensated based on the determined motion parameters. For example, a matrix $S_0$ may be computed based on these motion parameters and the view may be warped according to equation (1). At steps 604 to 607, the procedure described above with reference to **figure 3** is executed for each view $(u_l, v_m)$ different from $(u_{l_0}, v_{m_0})$. More specifically, at step 607, each view $(u_l, v_m)$ is stabilized and projected on view $(u_{l_0}, v_{m_0})$ using a single warping matrix $M_{lm \to l_0 m_0}$ (equation (3)), which amounts to taking $(u_{l_0}, v_{m_0})$ as target viewpoint in the algorithm of **figure 3**.

To this purpose, at step 604 first calibration parameters corresponding to the viewpoints are obtained. The calibration parameters may include intrinsic and extrinsic parameters as commonly known. Additionally, the calibration parameters may include parameters of a warping operator correcting optical aberrations, as described above.

At step 605, second calibration parameters corresponding to a target viewpoint at which a view must be synthesized are determined. The target viewpoint may correspond to the position of a target camera. The target camera may be a virtual camera or one of the existing cameras.

At step 606 depth information corresponding to the captured scene is obtained. As described above, the estimation of depth parameters is a mature topic and the output of any of the known techniques may be used.

At step 608, the warped images obtained in step 607 are combined and cropped using the principles described above.

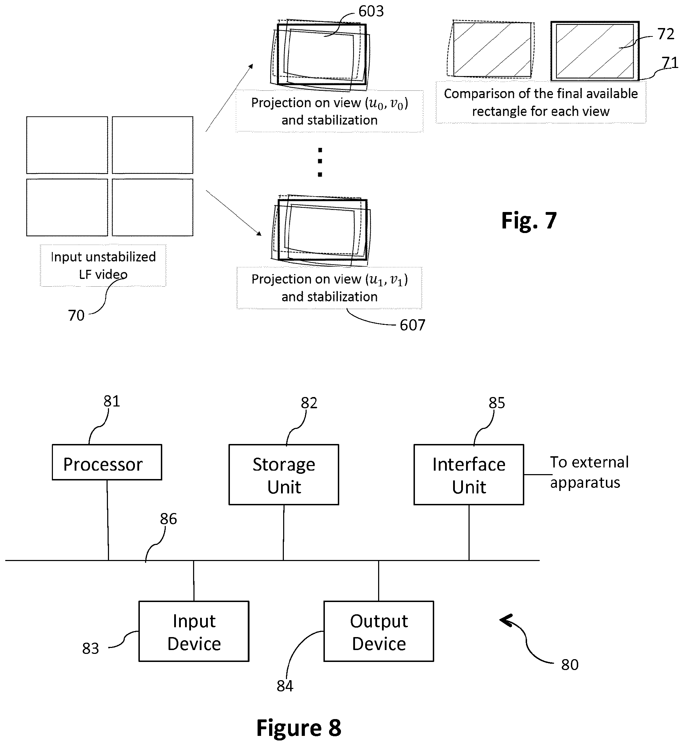

As shown in **figure 7,** by combining (608) the contributions from all the views $(u_l, v_m)$, $l \neq l_0$, $m \neq m_0$ the final rectangle available after cropping (rectangle 71) is bigger than by carrying out a mere motion compensation (rectangle 72). The stabilized view obtained at the end of step 608 contains more information and is therefore of better quality.

In an embodiment, the procedure described with reference to **figure 6** is carried out to stabilize each of the views (i.e. for $l_0 = 0, ... , L; m_0 = 0, ... , M$). The proposed solution thus outputs a stabilized multi-view video.

**Figure 8** is a schematic block diagram illustrating an example of a system or apparatus apparatus for synthesizing a view of a scene captured with a plurality of cameras at a plurality of time instants, according to an embodiment of the present disclosure.

An apparatus 80 illustrated in **Figure 8** includes a processor 81, a storage unit 82, an input device 83, an output device 84, and an interface unit 85 which are connected by a bus 86. Of course, constituent elements of the computer apparatus 80 may be connected by a connection other than a bus connection using the bus 86. Such an apparatus 80 is for example a Personal Computer, a tablet, or any other type of handheld device, such as a smartphone. It may also be embodied in glasses used for Augmented Reality/Virtual Reality (AR/VR).

The processor 81 controls operations of the apparatus 80. The storage unit 82 stores at least one program to be executed by the processor 81, and various data, including data of 4D light field images captured and provided by a light field camera, parameters used by computations performed by the processor 81, intermediate data of computations performed by the processor 81, and so on. The processor 81 may be formed by any known and suitable hardware, or software, or a combination of hardware and software. For example, the processor 81 may be formed by dedicated hardware such as a processing circuit, or by a programmable processing unit such as a CPU (Central Processing Unit) that executes a program stored in a memory thereof.

The storage unit 82 may be formed by any suitable storage or means capable of storing the program, data, or the like in a computer-readable manner. Examples of the storage unit 82 include non-transitory computer-readable storage media such as semiconductor memory devices, and magnetic, optical, or magneto-optical recording media loaded into a read and write unit. The program causes the processor 81 to perform a process for synthesizing a view of a scene captured with a plurality of cameras at a plurality of time instants according to an embodiment of the present disclosure as described above with reference to **Figure 3 or 6.**

The input device 83 may be formed by a keyboard, a pointing device such as a mouse, or the like for use by the user to input commands and select a virtual view position. The output device 84 may be formed by a display device to display, for example, a Graphical User Interface (GUI), or a stabilized view of the scene, according to embodiments of the present disclosure. The input device 83 and the output device 84 may be formed integrally by a touchscreen panel, for example.

The interface unit 85 provides an interface between the apparatus 80 and an external apparatus. The interface unit 85 may be communicable with the external apparatus via cable or wireless communication. In this embodiment, the external apparatus may be a light field camera. In this case, data of 4D light field images captured by the light field camera can be input from the light field camera to the apparatus 80 through the interface unit 85, then stored in the storage unit 82, and displayed on screen 84, after stabilization and compensation of the undesired shaky motion.

The apparatus 80 and the light field camera may communicate with each other via cable or wireless communication.

Although only one processor 81 is shown on **figure 8,** it must be understood that such a processor may comprise different modules and units embodying the functions carried out by apparatus 80 according to embodiments of the present disclosure, such as:

- a motion computing unit for determining motion parameters representative of camera jitter in the first view;
- a computing unit for mapping a pixel position of the first view to a position in a synthesized target view corresponding to a target camera, the mapping being determined based on:

  • the motion parameters;
  • first calibration parameters of the first camera;
  • second calibration parameters of the target camera;
  • and depth information corresponding to the first view;

- a generating unit for generating the synthesized target view by performing a single warping of the first view based on the mapping;

These modules and units may also be embodied in several processors 81 communicating and co-operating with each other.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit", "module", or "system".

When the present principles are implemented by one or several hardware components, it can be noted that an hardware component comprises a processor that is an integrated circuit such as a central processing unit, and/or a microprocessor, and/or an Application-specific integrated circuit (ASIC), and/or an Application-specific instruction-set processor (ASIP), and/or a graphics processing unit (GPU), and/or a physics processing unit (PPU), and/or a digital signal processor (DSP), and/or an image processor, and/or a coprocessor, and/or a floating-point unit, and/or a network processor, and/or an audio processor, and/or a multi-core processor. Moreover, the hardware component can also comprise a baseband processor (comprising for example memory units, and a firmware) and/or radio electronic circuits (that can comprise antennas) which receive or transmit radio signals. In one embodiment, the hardware component is compliant with one or more standards such as ISO/IEC 18092 / ECMA-340, ISO/IEC 21481 / ECMA-352, GSMA, StoLPaN, ETSI / SCP (Smart Card Platform), GlobalPlatform (i.e. a secure element). In a variant, the hardware component is a Radio-frequency identification (RFID) tag. In one embodiment, a hardware component comprises circuits that enable Bluetooth communications, and/or Wi-fi communications, and/or Zigbee communications, and/or USB communications and/or Firewire communications and/or NFC (for Near Field) communications.

Furthermore, aspects of the present principles can take the form of a computer readable storage medium. Any combination of one or more computer readable storage medium(s) may be utilized.

Thus for example, it will be appreciated by those skilled in the art that the block diagrams presented herein represent conceptual views of illustrative system components and/or circuitry embodying the principles of the invention. Similarly, it will be appreciated that any flow charts, flow diagrams, state transition diagrams, pseudo code, and the like represent various processes which may be substantially represented in computer readable storage media and so executed by a computer or a processor, whether or not such computer or processor is explicitly shown.

Although the present disclosure has been described with reference to one or more examples, workers skilled in the art will recognize that changes may be made in form and detail without departing from the scope of the disclosure and/or the appended claims.

**Claims**

**1.** A method for synthesizing a view of a scene captured with a plurality of cameras at a plurality of time instants, said method comprising:

- obtaining video data comprising a plurality of views, each view corresponding to one of said plurality of cameras and one of said plurality of time instants, said plurality of views comprising a first view captured by a first camera at a given time instant;
- determining motion parameters representative of camera jitter in said first view;
- mapping a pixel position of said first view to a position in a synthesized target view corresponding to a target camera, said mapping being determined based on:

  • said motion parameters;
  • first calibration parameters of said first camera;
  • second calibration parameters of said target camera;
  • and depth information corresponding to said first view;

- generating said synthesized target view by performing a single warping of said first view based on said mapping.

2. The method of claim 1, **wherein** mapping a pixel position of said first view to a position in said synthesized target view comprises:

   - determining a motion compensation matrix (S) based on said motion parameters;
   - determining a projection matrix (M) based on said first calibration parameters, said second calibration parameters and said depth information;
   - determining a transformation matrix (W) by multiplying said motion compensation matrix (S) with said projection matrix (M);
   - multiplying said pixel position of said first view by said transformation matrix (W).

3. The method of any of the previous claims, **wherein** said target camera is a virtual camera corresponding to a position of a user relative to a visualization screen or relative to a reference in a virtual environment.

4. The method of claim 3, **wherein** said second calibration parameters are determined based on said position of said user.

5. The method of claim 4, **wherein** mapping and generating said synthesized target view are performed iteratively by setting each view of said plurality of views captured at said given time instant as first view, the method further comprising combining the synthesized target views generated for said each view.

6. The method of any of claims 1 and 2, **wherein** said target camera is one of said plurality of cameras and said first camera is a different one of said plurality of cameras.

7. The method of claim 6, further comprising:

   - determining second motion parameters representative of camera jitter in the target view captured by said target camera at said given time instant;
   - generating a synthesized target view by warping said target view based on said second motion parameters.

8. The method of claim 7, **wherein** mapping and generating said synthesized target view are performed iteratively by setting each view of said plurality of views captured at said given time instant as first view, except said target view, the method further comprising combining the synthesized target views generated for said each view.

9. The method of claim 5 or 8, **wherein** said combining comprises:

   - identifying the largest rectangle overlapped by the pixels of said synthesized target views;
   - cropping regions of said synthesized target views falling outside of said largest rectangle.

10. A system for synthesizing a view of a scene captured with a plurality of cameras at a plurality of time instants, said system comprising:

   - a plurality of cameras delivering video data comprising a plurality of views, each view corresponding to one of said plurality of cameras and one of said plurality of time instants, said plurality of views comprising a first view captured by a first camera at a given time instant;

- a computing unit for:

- determining motion parameters representative of camera jitter in said first view;
- mapping a pixel position of said first view to a position in a synthesized target view corresponding to a target camera, said mapping being determined based on:

• said motion parameters;
• first calibration parameters of said first camera;
• second calibration parameters of said target camera;
• and depth information corresponding to said first view;

- generating said synthesized target view by performing a single warping of said first view based on said mapping;

- a display for displaying said synthesized target view.

11. A device for synthesizing a view of a scene captured with a plurality of cameras at a plurality of time instants comprising means for carrying out the steps of any of claims 1 to 9.

12. A data processing system comprising a processor assembly for carrying out the steps of any of claims 1 to 9.

13. A computer program comprising instructions which, when the program is executed by a computer, cause the computer to carry out the steps of any of claims 1 to 9.

14. A non-transitory computer-readable program storage device, tangibly embodying a program of instructions executable by the computer to perform a method comprising the steps of any of claims 1 to 9.

**Fig. 1**

**Fig. 2**

Obtain multi-view video video data — 301

Determine motion parameters representative of camera jitter in said first view — 302

Obtain first calibration parameters of first camera — 303

Obtain second calibration parameters of target camera — 304

Obtain depth information corresponding to first view — 305

Map pixel position of first view to position in synthesized target view based on said motion parameters, said first calibration parameters, said second calibration parameters and said depth information — 306

Generate synthesized target view by performing a single warping of first view based on mapping — 307

**Fig. 3**

Fig. 4

Fig. 5

| Obtain multi-view video video data | 601 |

| Determine motion parameters representative of camera jitter in target view $(u_{l0}, v_{m0})$ | 602 |

| Generate synthesized target view by warping target view $(u_{l0}, v_{m0})$ based on the motion parameters | 603 |

| Obtain first calibration parameters corresponding to viewpoints | 604 |

| Determine calibration parameters corresponding to a target viewpoint from said first calibration parameters | 605 |

| Obtain depth data of the captured scene | 606 |

| For each view $(u_l, v_m)$ different from $(u_{l0}, v_{m0})$, generate synthesized target view by performing a single warping of view $(u_l, v_m)$ based on calibration parameters of view $(u_l, v_m)$, second calibration parameters, depth parameters and motion parameters | 607 |

| Combine and crop the synthesized target views | 608 |

**Fig. 6**

Input unstabilized LF video

70

603

Projection on view $(u_0, v_0)$ and stabilization

Projection on view $(u_1, v_1)$ and stabilization

607

72
71

Comparison of the final available rectangle for each view

**Fig. 7**

81 Processor

82 Storage Unit

85 Interface Unit — To external apparatus

86

83 Input Device

84 Output Device

80

**Figure 8**

Europäisches
Patentamt

European
Patent Office

Office européen
des brevets

# EUROPEAN SEARCH REPORT

Application Number

EP 17 30 6668

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | SABATER NEUS ET AL: "Dataset and Pipeline for Multi-view Light-Field Video", 2017 IEEE CONFERENCE ON COMPUTER VISION AND PATTERN RECOGNITION WORKSHOPS (CVPRW), IEEE, 21 July 2017 (2017-07-21), pages 1743-1753, XP033145963, DOI: 10.1109/CVPRW.2017.221 [retrieved on 2017-08-22] | 1-5, 10-14 | INV. G06T3/40 |
| A | * abstract * * 3.1 Capturing; figure 1 * * page 31, left-hand column, line 14 - line 36; figure 5 * * 3.3. Calibration and Geometry Processing * * 3.4 Depth estimation * ----- | 6-9 | |
| A,D | US 9 131 155 B1 (DOLGIN YURI [IL] ET AL) 8 September 2015 (2015-09-08) * the whole document * ----- | 1-14 | |
| A | L. DABALA ET AL: "Efficient Multi-image Correspondences for On-line Light Field Video Processing", COMPUTER GRAPHICS FORUM, vol. 35, no. 7, 1 October 2016 (2016-10-01), pages 401-410, XP055454109, GB ISSN: 0167-7055, DOI: 10.1111/cgf.13037 * the whole document * ----- -/-- | 1-14 | TECHNICAL FIELDS SEARCHED (IPC) G06T |

The present search report has been drawn up for all claims

| Place of search | Date of completion of the search | Examiner |
|---|---|---|
| Munich | 21 March 2018 | Blaszczyk, Marek |

EPO FORM 1503 03.82 (P04C01)

page 1 of 2

Europäisches
Patentamt

European
Patent Office

Office européen
des brevets

# EUROPEAN SEARCH REPORT

Application Number

EP 17 30 6668

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HEUNG-YEUNG SHUM ET AL: "Survey of image-based representations and compression techniques", IEEE TRANSACTIONS ON CIRCUITS AND SYSTEMS FOR VIDEO TECHNOLOGY, INSTITUTE OF ELECTRICAL AND ELECTRONICS ENGINEERS, USA, vol. 13, no. 11, 1 November 2003 (2003-11-01), pages 1020-1037, XP011102938, ISSN: 1051-8215, DOI: 10.1109/TCSVT.2003.817360 * the whole document * ----- | 1-14 | |

TECHNICAL FIELDS
SEARCHED (IPC)

The present search report has been drawn up for all claims

| Place of search | Date of completion of the search | Examiner |
|---|---|---|
| Munich | 21 March 2018 | Blaszczyk, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 6668

This annex lists the patent family members relating to the patent documents cited in  the above-mentioned European search report.
The members are as contained in the European Patent Office EDP file on
The European Patent Office is in no way liable for these particulars which are merely given for the purpose of information.

21-03-2018

| Patent document cited in search report | Publication date | Patent family member(s) | Publication date |
|---|---|---|---|
| US 9131155    B1 | 08-09-2015 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9131155 B1

- US 9131155 B

**Non-patent literature cited in the description**

- **N. SABATER et al.** Dataset and Pipeline for Multi-view Light-Field Video. *IEEE Conference on Computer Vision and Pattern Recognition Workshops (CVPRW),* 21 July 2017

- **YU-SHUEN WANG et al.** Spatially and Temporally Optimized Video Stabilization. *IEEE Transactions on Visualization and Computer Graphics,* 2013, vol. 19.8, 1354-1361